# EUROPÄISCHE PATENTSCHRIFT

(11) **EP 2 751 677 B1**
(45) Veröffentlichungstag und Bekanntmachung des Hinweises auf die Patenterteilung: **26.09.2018**
(21) Anmeldenummer: 12753379.2
(22) Anmeldetag: 22.08.2012
(51) Int. Cl.: G06F 9/451

(54) **GENERIEREN EINER BENUTZERSCHNITTSTELLE AUF EINER ANZEIGE**
GENERATING A USER INTERFACE ON A DISPLAY
GÉNÉRATION D'UNE INTERFACE UTILISATEUR SUR UN ÉCRAN

(30) Priorität: 31.08.2011 CH 14292011
(43) Veröffentlichungstag der Anmeldung: 09.07.2014
(73) Patentinhaber: Ferag AG, 8340 Hinwil (CH)
(72) Erfinder: SCHÜEPP, Michael, CH-8303 Illnau (CH)
(74) Vertreter: Rentsch Partner AG
(86) Internationale Anmeldenummer: PCT/CH2012/000198
(87) Internationale Veröffentlichungsnummer: WO 2013/029190

(56) Entgegenhaltungen:
- US-A1- 2006 224 992
- US-A1- 2007 240 128
- US-A1- 2009 031 252
- US-A1- 2011 072 376
- US-A1- 2011 107 244
- US-B1- 6 313 854
- US-B1- 6 683 629

## Beschreibung

### Technisches Gebiet

Die vorliegende Erfindung betrifft eine Vorrichtung und ein Verfahren zum Generieren einer Benutzerschnittstelle auf einer Anzeige. Die vorliegende Erfindung betrifft insbesondere eine Vorrichtung und ein computerimplementiertes Verfahren zum Generieren einer grafischen Benutzerschnittstelle für eine Programmapplikation auf einer Anzeige.

### Stand der Technik

Bei bekannten Systemen und Verfahren zum Erzeugen von grafischen Benutzerschnittstellen auf Anzeigen werden Fensterbereiche der Benutzerschnittstelle direkt in der betreffenden Programmapplikation definiert oder sie werden in einer vordefinierten Form von einer Konfigurationsdatei eingelesen. Die Konfiguration enthält verschiedene von der Applikation hart codierte, vordefinierte Fenstertypen, deren Position und Erscheinungsbild über die Konfiguration beeinflussbar ist. Allerdings ist es nicht möglich neue Fenster hinzuzufügen. Falls programmierte Erweiterungsmodule zur Laufzeit dynamisch hinzugefügt werden, sind sie entweder in losgelösten, völlig frei "fliegenden" Fenstern angeordnet oder an ein von der Applikation vordefiniertes Fenster gebunden. Eine dynamische, und örtlich sowie vom Erscheinungsbild her flexible Integration von Fenstern in die Benutzerschnittstelle ist jedoch nicht möglich.

Das Dokument US 2009/031252 (Yoshiyuki) befasst sich mit einem Menüsystem, welches einfach nachgeführt werden kann, falls neue Funktionen hinzugefügt werden. Ein Leseteil installiert eine Programmfunktion die eine bestimmte Funktion ausführt sowie eine Taste welche die Funktion repräsentiert. Eine neue ID die eine Layoutposition auf einem Menuschirm repräsentiert wird mit der Funktion und der Taste assoziiert. Die ID, die Funktion und die Taste werden in einem Plugin-Speicher abgespeichert. Jedes der abgespeicherten Plugin generiert einen Menuschirm basierend auf der ID die mit der darzustellenden Taste assoziiert ist. Der generierte Menuschirm wird angezeigt.

### Darstellung der Erfindung

Es ist eine Aufgabe der vorliegenden Erfindung eine Vorrichtung und ein Verfahren zum Generieren von grafischen Benutzerschnittstellen auf einer Anzeige vorzuschlagen, welche zumindest einige Nachteile der bekannten Systeme und Verfahren nicht aufweisen. Es ist insbesondere eine Aufgabe der vorliegenden Erfindung eine Vorrichtung und ein Verfahren zum Generieren einer grafischen Benutzerschnittstelle auf einer Anzeige vorzuschlagen, welche eine dynamische, und örtlich sowie vom Erscheinungsbild her flexible Integration von Fenstern in die Benutzerschnittstelle ermöglichen.

Gemäss der vorliegenden Erfindung werden diese Ziele durch die Merkmale der unabhängigen Ansprüche 1, 6, 11 erreicht. Weitere vorteilhafte Ausführungsformen gehen ausserdem aus den abhängigen Ansprüchen und der Beschreibung hervor.

Die oben genannten Ziele werden durch die vorliegende Erfindung insbesondere dadurch erreicht, dass zum Generieren einer grafischen Benutzerschnittstelle für eine Programmapplikation auf einer Anzeige, mehrere Plugins für die Programmapplikation in einem Plugin-Katalog registriert werden, wobei die Plugins ein Hauptfenster-Plugin und mehrere Fensterbereich-Plugins umfassen. Beim Aufstarten der Programmapplikation wird das Hauptfenster-Plugin aufgestartet, welches auf der Anzeige ein Hauptfenster darstellt und mehrere Teilbereiche des Hauptfensters definiert. Die definierten Teilbereiche des Hauptfensters werden bei einem Bereich-Manager registriert. Die Fensterbereich-Plugins werden aufgestartet. Die Fensterbereich-Plugins registrieren sich jeweils beim Bereich-Manager und werden vom Bereich-Manager jeweils mit einem der definierten Teilbereiche des Hauptfensters verknüpft. Die Fensterbereich-Plugins stellen jeweils auf der Anzeige einen Fensterbereich in demjenigen Teilbereich des Hauptfensters dar, mit dem sie verknüpft sind.

In einer Ausführungsvariante werden im Plugin-Katalog zudem eines oder mehrere Widget-Plugins und ein Widget-Manager-Plugin registriert. Beim Aufstarten der Programmapplikation wird zudem das Widget-Manager-Plugin aufgestartet, welches Widget-Kontexte bestimmt, die jeweils einem der Fensterbereich-Plugins zugeordnet sind. Die Widget-Plugins werden aufgestartet und erzeugen jeweils Schnittstelleneingabelemente und/oder Schnittstellenausgabelemente und fügen diese auf der Anzeige in denjenigen Fensterbereich ein, an den sie durch die bestimmten Widget-Kontexte angeknüpft sind.

In einer weiteren Ausführungsvariante wird im Plugin-Katalog zudem ein Login-Plugin registriert. Beim Aufstarten der Programmapplikation wird zudem das Login-Plugin aufgestartet, welches vom Benutzer Identifizierungsdaten und Zugangsdaten entgegennimmt. Basierend auf den Identifizierungsdaten und Zugangsdaten werden benutzerspezifisch gespeicherte Widget-Konfigurationen bestimmt. Die benutzerspezifischen Widget-Konfigurationen werden auf die den Fensterbereich-Plugins zugeordneten Widget-Kontexte angewandt.

In einer Ausführungsvariante wird vor dem Aufstarten von Plugins jeweils eine Plugin-spezifische Lizenzüberprüfung durchgeführt und das Aufstarten eines Plugins wird bei ungenügender respektive fehlender Lizenz verhindert.

In einer weiteren Ausführungsvariante werden die Plugins vor dem Aufstarten sprachspezifisch gefiltert und das Aufstarten von sprachspezifischen Plugins wird auf eine definierte Sollsprache ausgerichtet.

Neben dem computerimplementierten Verfahren betrifft die vorliegende Erfindung zudem ein Computersystem zum Generieren einer grafischen Benutzerschnittstelle für eine Programmapplikation auf einer Anzeige und ein Computerprogrammprodukt zur Steuerung des Computersystems. Vorzugsweise umfasst das Computerprogrammprodukt ein computerlesbares Medium mit darauf gespeichertem Computerprogrammcode zur Steuerung eines oder mehrerer Prozessoren des Computersystems, derart dass das Computersystem das Verfahren zum Generieren einer grafischen Benutzerschnittstelle für eine Programmapplikation auf einer Anzeige ausführt.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
- Figur 1:: zeigt ein Blockdiagram, welches schematisch ein computerisiertes Maschinensteuerungssystem illustriert, das einen anwendungsunabhängigen, maschinenspezifischen Teil und einen maschinenunabhängigen, anwendungsspezifischen Teil umfasst, um auf Datenpunkte einer Maschine zuzugreifen.
- Figur 2:: zeigt ein Blockdiagram, welches schematisch mehrere computerisierte Maschinensteuerungssysteme und übergeordnete Leit- und Bediensysteme illustriert, welche über eine dienstorientierte Architekturplattform kommunikationsfähig miteinander verbunden sind.
- Figur 3:: zeigt ein Blockdiagram, welches schematisch ein computerisiertes Maschinensteuerungssystem illustriert, in welchem zum Zugreifen auf Datenpunkte einer Maschine ein anwendungsunabhängiger, maschinenspezifischer Teil und ein maschinenunabhängiger, anwendungsspezifischer Teil auf verschiedenen Computersystemen ausgeführt und über eine dienstorientierte Architekturplattform kommunikationsfähig miteinander verbunden sind.
- Figur 4:: zeigt ein Blockdiagram, welches schematisch mehrere computerisierte Maschinensteuerungssysteme und übergeordnete Leit- und Bediensysteme illustriert, bei welchen die anwendungsunabhängigen, maschinenspezifischen Teile und die maschinenunabhängigen, anwendungsspezifischen Teile auf verschiedenen Computersystemen ausgeführt und über eine dienstorientierte Architekturplattform kommunikationsfähig miteinander verbunden sind.
- Figur 5:: zeigt ein Blockdiagramm eines Computersystems zum Erzeugen einer grafischen Benutzerschnittstelle auf einer Anzeige.
- Figur 6:: zeigt ein Flussdiagramm, welches schematisch ein Beispiel einer Sequenz von Schritten für die Erzeugung einer grafischen Benutzerschnittstelle auf einer Anzeige illustriert.
- Figur 7a:: zeigt ein Beispiel eines auf einer Anzeige dargestellten Hauptfensters.
- Figur 7b:: zeigt ein Beispiel mehrerer auf der Anzeige dargestellter Fensterbereiche des Hauptfensters.
- Figur 7c:: zeigt ein Beispiel des auf der Anzeige dargestellten Hauptfensters mit mehreren Fensterbereichen und einem dargestellten Login-Bereich.
- Figur 7d:: zeigt ein Beispiel des auf der Anzeige dargestellten Hauptfensters mit einem dargestellten Login-Bereich sowie mehreren Fensterbereichen und darin dargestellten Widgets.

### Wege zur Ausführung der Erfindung

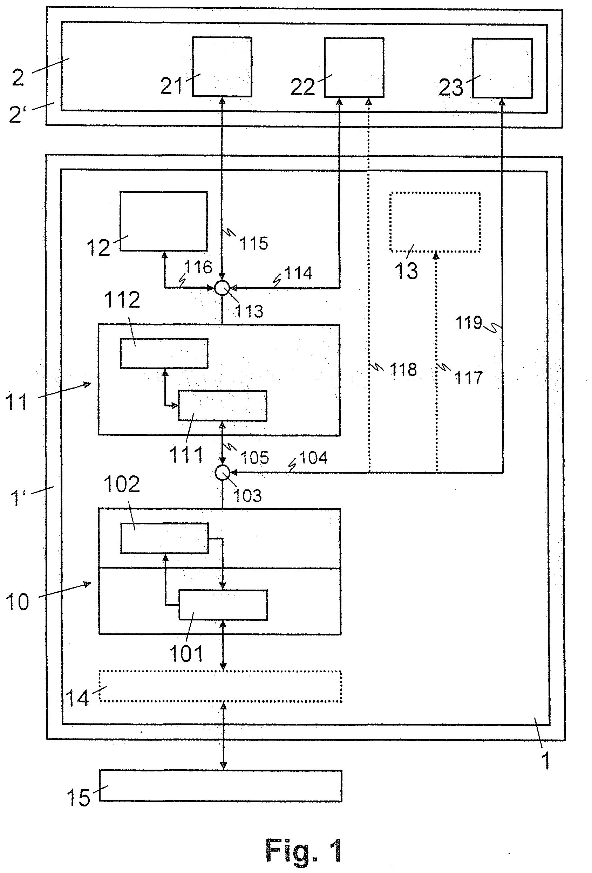

In den Figuren 1, 2 und 3 bezieht sich das Bezugszeichen 1 auf ein computerisiertes Maschinensteuerungssystem zur Steuerung von Maschinen 15, beispielsweise Druckmaschinen, Druckproduktverarbeitungsmaschinen, Fördermaschinen, etc. Die Steuerung der Maschine 15 erfolgt über eine programmierbare Vorrichtung, beispielsweise über eine speicherprogrammierbare Steuerung, ein so genannter Programmable Logic Controller (PLC) 14, welche mit Sensoren und Aktoren der Maschine 15 (elektrisch) verbunden ist. Je nach Ausführungsvariante ist die programmierbare Vorrichtung 15 direkt oder über einen Microcontroller der Maschine 15 mit der Maschine 15 respektive deren Sensoren und Aktoren verbunden.

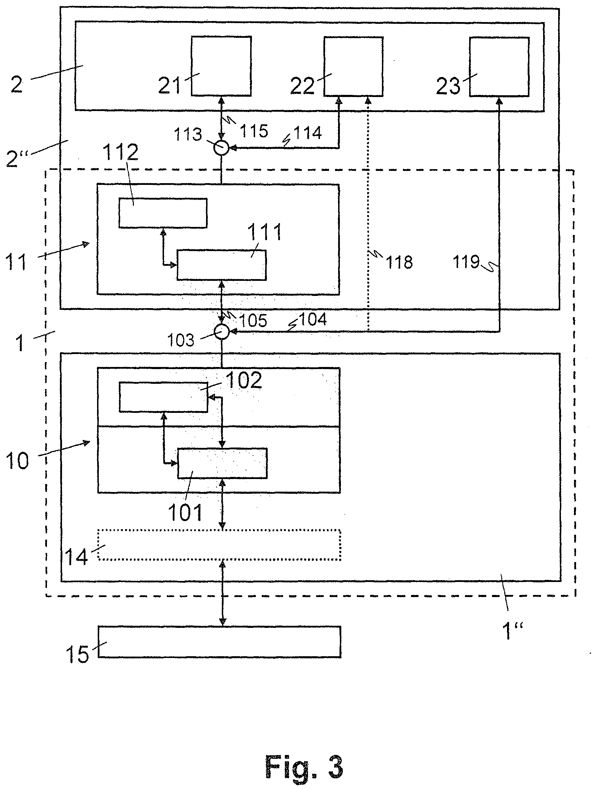

In den Figuren 1 und 3 bezieht sich das Bezugszeichen 2 auf ein computerisiertes Leit- oder Bediensystem. Das Leit- oder Bediensystem 2 ist auf einem betriebsfähigen Computersystem 2' mit einem oder mehreren Prozessoren ausgeführt, welche mit einer oder mehreren Anzeigen verbunden sind, beispielsweise berührungsempfindliche Anzeigen, insbesondere so genannte Multitouch Anzeigen.

Wie in den Figuren 1 und 3 schematisch dargestellt ist, umfasst das Leit- oder Bediensystem 2 mehrere funktionale Module, beispielsweise eine Benutzerschnittstelle 21 zur Konfiguration, Überwachung und Bedienung der Produktion auf einer oder mehreren Maschinen 15, 15a, 15b, 15c, 15d; eine Benutzerschnittstelle 23 zur Wartung und Diagnose einer oder mehreren Maschinen 15, 15a, 15b, 15c, 15d; und ein Dienstmodul 22 mit mehreren übergeordneten Diensten, so genannte High Level Services wie beispielsweise Kommandos zum Starten, Stoppen oder Abrechen der Produktion, die für Dienstkonsumenten wie die Benutzerschnittstellen 21, 23 zugreifbar und ausführbar sind. Wie später detaillierter beschrieben wird, basieren die Benutzerschnittstellen 21, 23 vorzugsweise auf so genannten Plugins und umfassen mehrere selektierbare und aktivierbare Widget-Plugins. Das Dienstmodul 22 ist vorzugsweise als Plugin und Dienst einer dienstorientierten Architekturplattform 100 ausgeführt, beispielsweise die Windows Communication Foundation (WCF) in .Net von Microsoft Corporation.

Wie in den Figuren 1 und 3 dargestellt ist, umfasst das Maschinensteuerungssystem 1 funktionale Module, die in einen anwendungsunabhängigen, maschinenspezifischen Teil 10 und einen maschinenunabhängigen, anwendungsspezifischen Teil 11 aufgeteilt sind. Abhängig von der Ausführungsvariante und/oder Konfiguration umfassen die funktionalen Module des Maschinensteuerungssystems 1 zudem eine Benutzerschnittstelle 12 zur Konfiguration, Überwachung und Bedienung der Produktion auf einer oder mehreren Maschinen 15, 15a, 15b, 15c, 15d und/oder eine Benutzerschnittstelle 13 zur Wartung und Diagnose einer oder mehrerer Maschinen 15, 15a, 15b, 15c, 15d. Die Benutzerschnittstellen 12, 13 basieren vorzugsweise auf so genannten Plugins und umfassen mehrere selektierbare und aktivierbare Widget-Plugins, wie später detaillierter beschrieben wird.

In der Ausführungsvariante gemäss Figur 1 sind der maschinenspezifische Teil 10 und der anwendungsspezifische Teil 11 auf dem selben betriebsfähigen Computersystem 1' ausgeführt, beispielsweise auf einem oder mehreren separaten Prozessoren, die mit dem PLC 14 verbunden sind, oder auf einem oder mehreren Prozessoren des PLC 14. Das Computersystem 1' mit dem Maschinensteuerungssystem 1 ist als Teil der Maschine 15 ausgeführt, direkt an der Maschine 15 angebracht oder getrennt und entfernt davon angeordnet. Das Computersystem 1' ist beispielsweise als so genannter Embedded PC ausgeführt.

In der Ausführungsvariante gemäss Figur 3 sind der maschinenspezifische Teil 10 und der anwendungsspezifische Teil 11 auf verschiedenen Computersystemen 1", 2" ausgeführt. Dabei ist der maschinenspezifische Teil 10 auf dem Computersystem 1" ausgeführt, beispielsweise auf einem oder mehreren separaten Prozessoren, die mit dem PLC 14 verbunden sind, oder auf einem oder mehreren Prozessoren des PLC 14. Das Computersystem 1" mit dem maschinenspezifischen Teil 10 ist als Teil der Maschine 15 ausgeführt, direkt an der Maschine 15 angebracht oder getrennt und entfernt davon angeordnet. Der anwendungsspezifische Teil 11 hingegen ist auf dem Computersystem 2" des Leit- oder Bediensystems 2 ausgeführt.

Der maschinenspezifische Teil 10 umfasst ein Steuermodul 101 und ein maschinenspezifisches Domänenmodell (Domain Model) 102. Das Steuermodul 101 ist eingerichtet, über ein maschinenspezifisches Kommunikationsprotokoll, z.B. TCP/IP, Profibus, oder ADS (Automation Device Specification) von der Firma Beckhoff, auf die Datenpunkte der Maschine 15 zuzugreifen, um den aktuellen Wert eines oder mehrerer Datenpunkte zu lesen oder zu schreiben.

Dabei ist ein Datenpunkt ein Wert der von der Maschine 15 ausgegeben wird, zum Beispiel ein Mess- oder Zählerwert eines Sensors oder Zählers der Maschine 15, oder in die Maschine 15 eingegeben wird, beispielsweise ein Steuerbefehl, Steuerparameter oder Stellwert. Datenpunkte umfassen insbesondere auch (aktuelle) Statuswerte und Zustandsinformationen der Maschine 15. Ein Datenpunkt repräsentiert die Eingabe- oder Ausgabe von Werten der Maschine 15, insbesondere über einen Prozessor der Maschine 15. Das maschinenspezifische Domänenmodell 102 umfasst maschinenspezifische Datenpunkt-Objekte. Dabei sind die maschinenspezifischen Datenpunkt-Objekte Datenobjekte, die jeweils einen oder mehrere Datenpunkte der Maschine 15 abbilden. Wenn das Steuermodul 101 über den PLC 14 auf die Datenpunkte der Maschine 15 zugreift, ist das maschinenspezifische Kommunikationsprotokoll spezifisch auf den betreffenden PLC 14 ausgerichtet, und das maschinenspezifische Domänenmodell 102 weist ausschliesslich Datenpunkt-Objekte auf, die über den PLC 14 verfügbar sind. Der Lesevorgang erfolgt periodisch und zudem aufgrund eines expliziten Lesebefehls. Aktuelle Werte von gelesenen Datenpunkten werden vom Steuermodul 101 in ein entsprechendes Datenpunkt-Objekt des maschinenspezifischen Domänenmodells 102 geschrieben. Der Schreibvorgang erfolgt in der Regel aufgrund eines expliziten Schreib- oder Dienstbefehls an das maschinenspezifische Domänenmodell 102. Dabei wird der aktuelle Wert des betreffenden Datenpunkt-Objekts im maschinenspezifischen Domänenmodell 102 vom Steuermodul 101 in den entsprechenden Datenpunkt der Maschine 15 respektive des PLC 14 geschrieben. Überdies soll hier festgehalten werden, dass ein Datenpunkt - und entsprechend auch ei n Datenpunkt-Objekt - mehrere Datenwerte umfassen kann, beispielsweise eine Tabelle oder Matrix von Datenwerten, die in einer (strukturierten) Datei angeordnet sind.

In einer Ausführungsvariante, legt das Steuermodul 101 die unmittelbar von der Maschine 15 oder über den PLC 14 erfassten Datenpunkte in einem Zwischenspeicher ab und aktualisiert die entsprechenden Datenpunkt-Objekte im maschinenspezifischen Domänenmodell 102 erst dann, wenn sämtliche oder zumindest ein definierter Teil der Datenpunkte einen konsistenten Zustand aufweisen, also keine der betreffenden Datenpunkte einen Wert eines alten Zustands oder eines instabilen Zwischenzustands aufweisen. Somit werden Snapshots mit aktuellen und zustandskonsistenten Datenpunkten der Maschine 15 respektive von definierten Teilen der Maschine 15 erzeugt.

In einer weiteren Variante, prüft das Steuermodul 101 periodisch, ob die Maschine 15 respektive der PLC 14 verfügbar, d.h. verbunden, betriebsbereit und zugreifbar, ist. Dazu sendet das Steuermodul 101 periodisch entsprechende Anfragemeldungen an die Maschine 15 respektive den PLC 14. Wenn innerhalb einer definierten Zeitdauer im Steuermodul 101 keine Rückmeldung von der Maschine 15 respektive dem PLC 14 empfangen wird, setzt das Steuermodul 101 einen dem maschinenspezifischen Domänenmodell 102 zugeordneten Status auf einen Wert, der angibt, dass das Domänenmodell 102 nicht mit der Maschine 15 verbunden ist.

Der anwendungsspezifische Teil 11 umfasst ein anwendungsspezifisches Domänenmodell (Domain Model) 112 und ein Abbildungsmodul 111. Das anwendungsspezifische Domänenmodell 112 umfasst anwendungsspezifische Datenobjekte. Das Abbildungsmodul 111 ist eingerichtet, über den entsprechenden Dienst 103 der dienstorientierten Architekturplattform 100 auf das maschinenspezifische Domänenmodell 102 zuzugreifen. In einer Schreibfunktion werden anwendungsspezifische Datenobjekte auf maschinenspezifische Datenpunkt-Objekte abgebildet, dabei schreibt das Abbildungsmodul 111 aktuelle Werte von anwendungsspezifischen Datenobjekten in zugeordnete Datenpunkt-Objekte des maschinenspezifischen Domänenmodells 102. In einer Lesefunktion werden maschinenspezifische Datenpunkt-Objekte auf anwendungsspezifische Datenobjekte abgebildet, dabei liest das Abbildungsmodul 111 aktuelle Werte von einem oder mehreren maschinenspezifischen Datenpunkt-Objekten und schreibt diese in zugeordnete Datenobjekte des anwendungsspezifischen Domänenmodells 112. Sowohl der Lesevorgang als auch der Schreibvorgang erfolgen ausschliesslich aufgrund von expliziten Schreib-, Lese- oder Dienstbefehlen an das anwendungsspezifische Domänenmodell 112.

Das maschinenspezifische Domänenmodell 102 und das anwendungsspezifische Domänenmodel 112 sind vorzugsweise als verfügbare Dienste 103 respektive 113 der dienstorientierten Architekturplattform 100, z.B. WCF, ausgeführt. Dabei sind die verfügbaren Funktionen, z.B. Schreiben oder Lesen, und Datenpunkt-Objekte respektive anwendungsspezifische Datenobjekte der Domänenmodelle 102, 112 über eine für Dienstkonsumenten zugreifbare Schnittstelle der dienstorientierten Architekturplattform 100 definiert und abrufbar. Die definierten Dienste 103, 113 sind für Dienstkonsumenten über die dienstorientierte Architekturplattform 100 zugreifbar, wie in den Figuren 1 und 3 schematisch durch die Pfeile 104 und 105 respektive 114, 115 und 116 angedeutet ist. Die Domänenmodelle 102, 112 liefern ihren Dienstkonsumenten maschinenspezifische Datenpunkt-Objekte respektive anwendungsspezifische Datenobjekte nur auf Anfrage, d.h. wenn der Dienstkonsument auf den entsprechenden Dienst 103, 113 zugreift und das betreffende Datenpunkt-Objekt respektive Datenobjekt anfordert. Beispielsweise erhält der anwendungsspezifische Teil 11 nur dann Datenpunkt-Objekte vom maschinenspezifischen Domänenmodell 102, wenn er diese explizit über den entsprechenden Dienst 103 anfordert, und die Benutzerschnittstellen 12, 13, 21 und das Dienstmodul 22 erhalten vom anwendungsspezifische Teil 11 nur dann Datenobjekte vom anwendungsspezifischen Domänenmodell 112, wenn sie diese explizit über den entsprechenden Dienst 113 anfordern.

Wie mit den Pfeilen 117, 118 und 119 schematisch angedeutet ist, sind das Dienstmodul 22 und die Benutzerschnittstellen 23 und 13 in einer Variante eingerichtet direkt über den Dienst 103 auf das maschinenspezifische Domänenmodell 102 zuzugreifen. Dazu sind maschinenspezifische Anpassungen von Dienstmodul 22 und Benutzerschnittstellen 23, 13 erforderlich.

Für den Datenaustausch sind die Computersystem 1', 1", 2', 2" über eine Kommunikationsverbindung verbunden, beispielsweise über einen Datenbus oder ein lokales Netzwerk (LAN). Die Kommunikation unter den funktionalen Modulen, die als Dienste der dienstorientierten Architekturplattform 100 ausgeführt sind, erfolgt vorzugsweise über Kommunikationsfunktionen der dienstorientierten Architekturplattform 100, z.B. WCF, die beispielsweise als Teil einer Laufzeitumgebung der dienstorientierten Architekturplattform 100 verfügbar sind. Um zu verhindern, dass Verbindungen zwischen Diensten der dienstorientierten Architekturplattform 100 wegen Inaktivität innerhalb einer definierten Zeitdauer (timeout) beendet werden, sind die als Dienste ausgeführten funktionalen Module eingerichtet, periodisch Wachhalteanfragen an diejenigen Dienste zu übermitteln, von denen sie Dienstkonsumenten sind, respektive von ihren Dienstkonsumenten periodische Wachhalteanfragen zu empfangen und unmittelbar mit einer Wachhalteantwort zu beantworten.

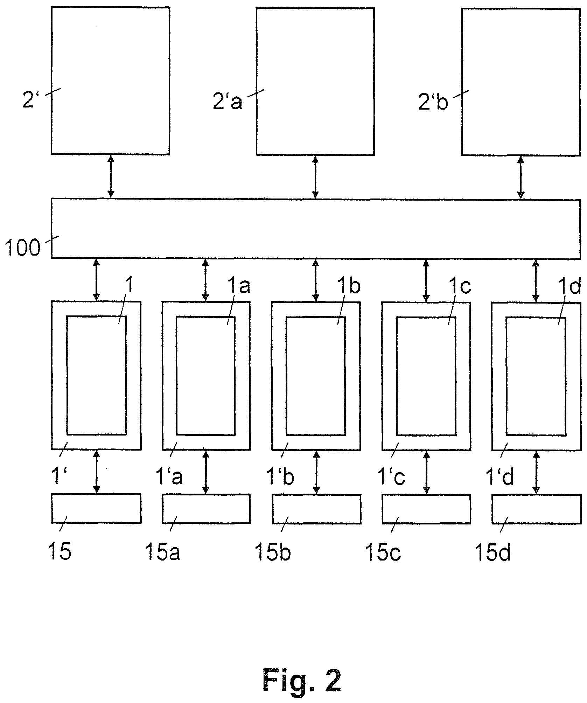

Die Figur 2 illustriert eine Anlage mit mehreren Maschinen 15, 15a, 15b, 15c, 15d, die jeweils von einem Maschinensteuerungssystem 1, 1a, 1b, 1c, 1d angesteuert werden, dessen funktionale Module, wie in der Figur 1 illustriert, auf einem gemeinsamen Computersystem 1', 1'a, 1'b, 1'c, 1'd ausgeführt sind. Wie in der Figur 2 ersichtlich ist, ist das Leit- oder Bediensystem 2 auf mehreren betriebsfähigen Computersystemen 2', 2'a, 2'b ausgeführt, und umfasst mehrere sich ergänzende und/oder redundante Programmapplikationen (Anwendung). Wie in der Figur 2 schematisch illustriert ist, kommunizieren und interagieren die auf den Computersystemen 1', 1'a, 1'b, 1'c, 1'd, 2', 2'a, 2'b ausgeführten funktionalen Module der Maschinensteuerungssysteme 1, 1a, 1b, 1c, 1d und des Leit- oder Bediensystems 2 über die dienstorientierte Architekturplattform 100, z.B. WCF, und deren Kommunikationsfunktionen.

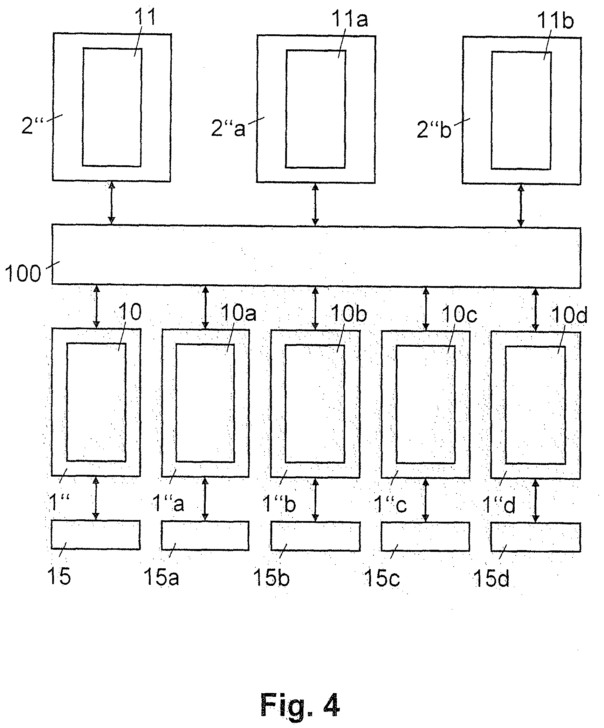

Die Figur 4 illustriert eine Anlage mit mehreren Maschinen 15, 15a, 15b, 15c, 15d, die jeweils von einem Maschinensteuerungssystem 1 angesteuert werden, dessen funktionale Module, wie in der Figur 3 illustriert, jeweils auf verschiedenen Computersystemen ausgeführt sind. Die maschinenspezifischen Teile 10, 10a, 10b, 10c, 10d sind jeweils auf dem mit der betreffenden Maschine 15, 15a, 15b, 15c, 15d verbundenen Computersystem 1", 1"a, 1"b, 1"d ausgeführt. Die anwendungsspezifischen Teile 11, 11a, 11b hingegen sind auf den Computersystemen 2", 2"a, 2"b des Leit- oder Bediensystems 2 ausgeführt, welches mehrere sich ergänzende und/oder redundante Programmapplikationen umfasst. Wie in der Figur 4 schematisch illustriert ist, kommunizieren und interagieren die auf den Computersystemen 1", 1"a, 1"b, 1"c, 1"d, 2", 2"a, 2"b ausgeführten funktionalen Module der maschinenspezifischen Teile 10, 10a, 10b, 10c, 10d, der anwendungsspezifischen Teile 11, 11a, 11b und des Leit- oder Bediensystems 2 über die dienstorientierte Architekturplattform 100, z.B. WCF, und deren Kommunikationsfunktionen.

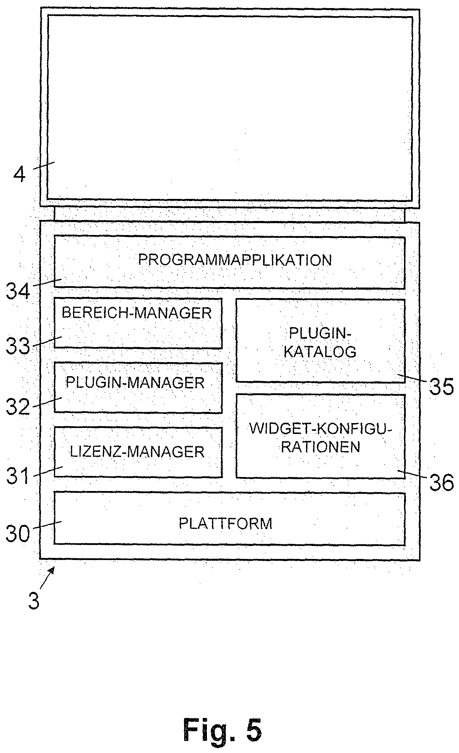

In der Figur 5 bezieht sich das Bezugszeichen 3 auf ein Computersystem mit einem oder mehreren betriebsfähigen Computern und jeweils einem oder mehreren Prozessoren, welche mit einer oder mehreren Anzeigen 4 verbunden sind, beispielsweise berührungsempfindliche Anzeigen, insbesondere so genannte Multitouch Anzeigen. Das Computersystem 3 umfasst beispielsweise eines oder mehrere der oben beschriebenen Computersysteme 1', 1'a, 1'b, 1'c, 1'd, 1", 1"a, 1"b, 1"c, 1"d, 2', 2'a, 2'b, 2", 2"a und/oder 2"b.

Wie in der Figur 5 schematisch dargestellt ist umfasst das Computersystem 3 mehrere funktionale Module, insbesondere eine Plattform 30, einen Lizenz-Manager 31, einen Plugin-Manager 32, einen Bereich-Manager 33, mindestens eine Programmapplikation 34, ein Plugin-Katalog 35 und gespeicherte (benutzerspezifische) Widget-Konfigurationen 36. Die Widget-Konfigurationen 36 definieren die Ansichten und anzuzeigenden Dateninhalte eines Widgets, die für einen bestimmten Benutzer zu verwenden sind. Widget-Konfigurationen 36 werden beispielsweise anfänglich in einer Benutzergrundkonfiguration definiert und später jeweils beim Herunterfahren der Applikation und/oder Logout des Benutzers aufgrund der aktuellen Ansichten und angezeigten Dateninhalte der Widgets bestimmt und gespeichert.

Die Plattform 30 umfasst mehrere Komponenten, insbesondere Komponenten einer Laufzeitumgebung zur Unterstützung einer dienstorientierten Architekturplattform, einer dynamischen Applikationserweiterung und Grafikfunktionen, beispielsweise .NET Komponenten von Microsoft Corp. für WCF, MEF (Managed Extensibility Framework) und WPF (Windows Presentation Foundation).

Der Plugin-Katalog 35 ist beispielsweise in MEF ausgeführt und umfasst mehrere Plugins respektive Referenzen auf gespeicherte Plugins. Plugins sind Softwarekomponenten (Computerprogramme), die eine bestehende softwarebasierte Programmapplikation erweitern, so dass die Programmapplikation mit den durch das Plugin bereitgestellten Funktionen erweitert wird. Die Plugins sind beispielsweise beim Aufstarten oder zur Laufzeit einer Programmapplikation (Anwendung) dynamisch als Ergänzung zur Programmapplikation ladbar und ausführbar. Der Plugin-Katalog 35 umfasst insbesondere ein Hauptfenster-Plugin, mehrere Fensterbereich-Plugins, ein Login-Plugin, ein Widget-Manager-Plugin und mehrere Widget-Plugins.

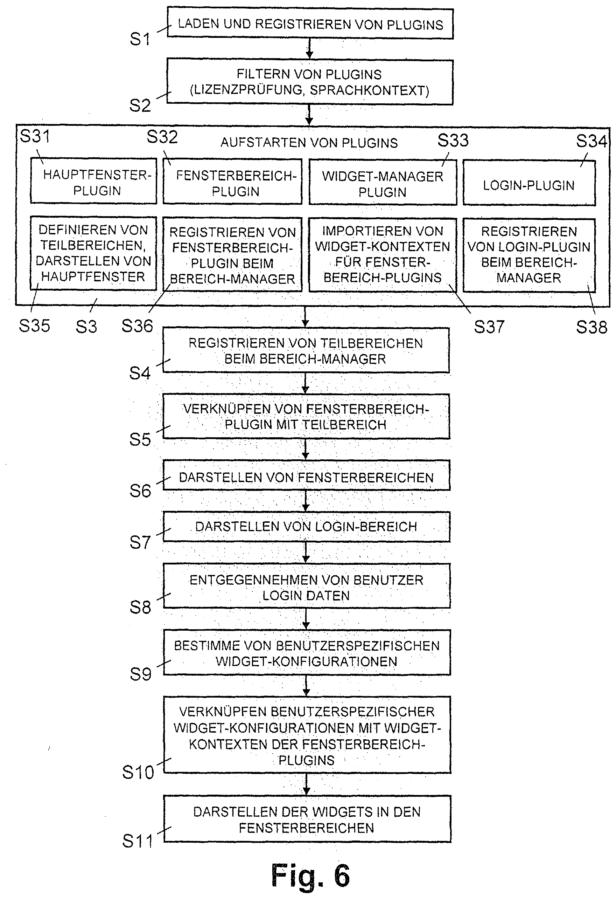

In den folgenden Abschnitten wird mit Bezug auf die Figur 6 beispielhaft eine Sequenz von Schritten zum Generieren einer grafischen Benutzerschnittstelle 6 für eine Programmapplikation 34 auf einer Anzeige 4 beschrieben.

Im Schritt S1, werden ladbare gespeicherte Plugins respektive Referenzen auf diese Plugins in den Plugin-Katalog 35 geladen, beispielsweise per MEF. Schritt S1 wird beispielsweise als vorbereitender Schritt als Teil einer Systemkonfiguration ausgeführt. Jedes Plugin ist mit verschiedenen Attributen versehen. Diese Plugin-Attribute definieren zumindest Aufstarterfordernisse und Aufstarteinschränkungen und umfassen insbesondere auch Sprachattribute und Lizenzattribute.

Im Schritt S2, werden die Plugins im Plugin-Katalog 35 basierend auf ihren Attributen gefiltert nachdem die Programmapplikation 34 gestartet wurde. Dabei überprüft der Lizenz-Manager 31 für jedes Plugin ob eine gültige Lizenz vorliegt. Zudem wird die Sprache überprüft, die bei Plugins mit Schnittstellenfunktion für die Interaktion mit einem Benutzer verwendet wird.

Im Schritt S3 startet der Plugin-Manager 32 die Plugins entsprechend ihrer Aufstarterfordernisse und Aufstarteinschränkungen in der erforderlichen, beispielsweise benutzerspezifischen Sprache, wenn dafür jeweils eine ausreichende Lizenz vorliegt. Die Plugins werden beispielsweise per MEF gestartet.

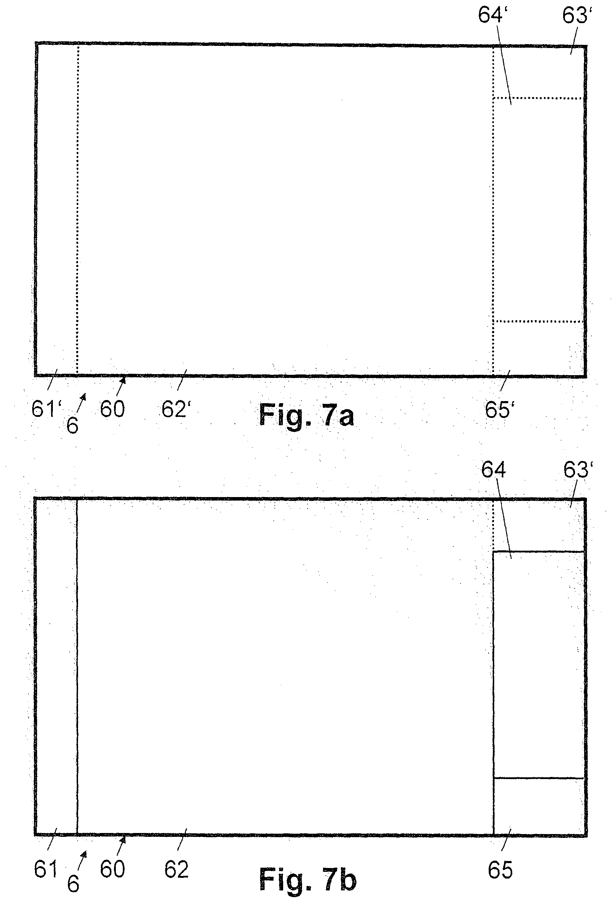

Im Schritt S31 wird das Hauptfenster-Plugin gestartet. Wie mit dem Bezugszeichen S35 angedeutet wird, stellt das Hauptfenster-Plugin auf der Anzeige 4 ein Hauptfenster dar und definiert im Hauptfenster mehrere Teilbereiche. Wie in der Figur 7a dargestellt ist, ist das Hauptfenster 60 im Wesentlichen bloss ein auf der Anzeige 4 dargestellter Rahmen (Shell), für welchen auf der Anzeige 4 nicht ersichtlich mehrere Teilbereiche 61', 62', 63', 64', 65' definiert werden. Die Teilbereiche 61', 62', 63', 64', 65' werden vom Hauptfenster-Plugin beispielsweise in WPF definiert.

Im Schritt S32 werden zudem die Fensterbereich-Plugins gestartet. Wie mit dem Bezugszeichen S36 angedeutet wird, registrieren sich die Hauptfenster-Plugins jeweils beim Bereich-Manager 33.

Im Schritt S33 wird das Widget-Manager-Plugin gestartet. Wie mit dem Bezugszeichen S37 angedeutet wird, importiert das Widget-Manager-Plugin Widget-Kontexte, die jeweils den Fensterbereich-Plugins zugeordnet gespeichert sind, beispielsweise per MEF. Die Widget-Kontexte definieren mögliche, zulässige Widgets, die beispielsweise in einem zugeordneten Fensterbereich einfügbar sind.

Im Schritt S34 wird das Login-Plugin gestartet. Wie mit dem Bezugszeichen S38 angedeutet wird, registriert sich das Login-Plugin beim Bereich-Manager 33.

In der Figur 6 wird im Zusammenhang mit Schritt S3 nur eine Auswahl von Plugins angezeigt, die aufgestartet werden, die im Zusammenhang mit der Erzeugung der grafischen Benutzerschnittstelle 6 von besonderem Interesse sind. Der Fachmann wird verstehen, dass jedoch auch weitere Plugins aufgestartet werden, beispielsweise die Widget-Plugins.

Im Schritt S4 werden die, beispielsweise in WPF definierten Teilbereiche 61', 62', 63', 64', 65' beim Bereich-Manager 33 angemeldet (registriert), beispielsweise durch WPF, das zudem sämtliche definierten Teilbereiche 61', 62', 63', 64', 65' initialisiert.

Im Schritt S5 verknüpft der Bereich-Manager 33 die angemeldeten (registrierten) Teilbereiche 61', 62', 63', 64', 65' mit den Fensterbereich-Plugins, die jeweils für die Teilbereiche 61', 62', 63', 64', 65' vorgesehen sind. Dabei wird insbesondere auch das Login-Plugin mit dem dafür vorgesehenen Teilbereich 63' verknüpft.

Im Schritt S6 stellen die Fensterbereich-Plugins auf der Anzeige 4 jeweils im Teilbereich 61', 62', 64', 65' des Hauptfensters 60 mit dem sie verknüpft sind, ihren Fensterbereich dar. Wie in der Figur 7b dargestellt ist, sind nun auf der Anzeige 4 die Fensterbereiche 61, 62, 64, 65 im Hauptfenster 60 der Benutzerschnittstelle 6 sichtbar dargestellt.

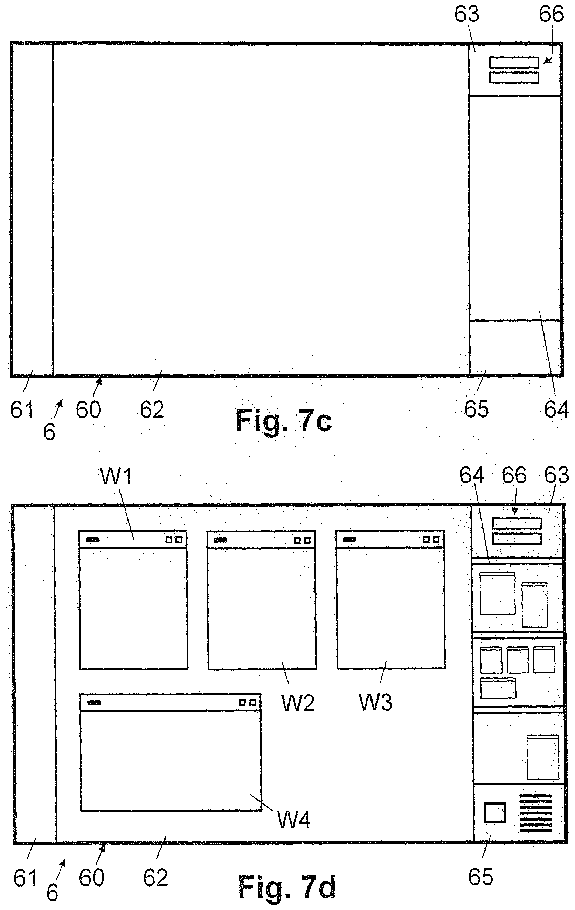

Im Schritt S7 stellt das Login-Plugin auf der Anzeige 4 im Teilbereich 63' des Hauptfensters 60 mit dem es verknüpft ist, seinen Login-Bereich dar. Wie in der Figur 7c dargestellt ist, ist nun auf der Anzeige 4 zusätzlich zu den Fensterbereichen 61, 62, 64, 65 im Hauptfenster 60 der Benutzerschnittstelle 6 auch der Login-Bereich 63 mit entsprechenden Login-Eingabefeldern 66 sichtbar dargestellt.

Im Schritt S8, nimmt das Login-Plugin vom Benutzer Login-Daten über die Login-Eingabefelder 66 entgegen, beispielsweise ein Benutzername und ein Passwort oder Zugangscode.

Im Schritt S9, lädt das Widget-Manager-Plugin gemäss dem Login des (berechtigten) Benutzers die gespeicherten benutzerspezifischen Widget-Konfigurationen 36.

Im Schritt S10, verknüpft das Widget-Manager-Plugin die Widget-Konfigurationen 36 des Benutzers mit den zuvor importierten Widget-Kontexten, die den Fensterbereich-Plugins zugeordnet sind. Dabei werden die durch die benutzerspezifischen Widget-Konfigurationen 36 definierten Ansichten mit den Widget-Kontexten der Fensterbereiche verknüpft.

Im Schritt S11, erzeugen die Widget-Plugins jeweils ihre Schnittstelleneingabelemente und/oder Schnittstellenausgabelemente und fügen sie auf der Anzeige 4 jeweils in denjenigen Fensterbereich ein, mit dem sie durch die bestimmten Widget-Kontexte verknüpft sind und zwar in der durch die benutzerspezifischen Widget-Konfigurationen 36 definierten Ansicht und den darin anzuzeigenden Dateninhalten. Wie in der Figur 7d dargestellt ist, sind nun auf der Anzeige 4 in den Fensterbereichen 61, 62, 64, 65 des Hauptfensters 60 der Benutzerschnittstelle 6 zusätzlich auch die Widgets W1, W2, W3, W4 sichtbar dargestellt.

Abschliessend soll angeführt werden, dass die oben angeführten funktionalen Module vorzugsweise als programmierte Softwaremodule ausgeführt sind, welche Programmcode zur Steuerung von jeweils einem oder mehreren Prozessoren eines Computers umfassen und auf einem Computerprogrammprodukt gespeichert sind, das fest oder entfernbar mit den Prozessoren verbunden ist und ein nicht-flüchtiges, greifbares computerlesbares Medium umfasst. Der Fachmann wird jedoch verstehen, dass die funktionalen Module in alternativen Ausführungsvarianten teilweise oder vollständig mittels Hardwarekomponenten ausgeführt sein können. Zudem sei hier festgehalten, dass in der Beschreibung zwar Computerprogrammcode spezifischen funktionalen Modulen zugeordnet wurde und dass die Ausführung von Schritten in einer bestimmten Reihenfolge dargestellt wurde, dass der Fachmann jedoch verstehen wird, dass der Computerprogrammcode unterschiedlich strukturiert und die Reihenfolge von mindestens gewissen Schritten geändert werden kann, ohne dabei vom Schutzgegenstand abzuweichen.

## Patentansprüche

1. Ein computerimplementiertes Verfahren zum Generieren einer grafischen Benutzerschnittstelle (6) für eine Programmapplikation (34) auf einer Anzeige (4), umfassend:
Registrieren (S1) von mehreren Plugins für die Programmapplikation (34) in einem Plugin-Katalog (35), wobei die Plugins ein Hauptfenster-Plugin und mehrere Fensterbereich-Plugins umfassen,
beim Aufstarten der Programmapplikation (34) Aufstarten des Hauptfenster-Plugins (S31), welches auf der Anzeige (4) ein Hauptfenster (60) darstellt und mehrere Teilbereiche (61', 62', 63', 64', 65') des Hauptfensters (60) definiert (S35), Registrieren (S4) der definierten Teilbereiche (61', 62', 63', 64', 65') des Hauptfensters (60) bei einem Bereich-Manager (33), und
Aufstarten der Fensterbereich-Plugins (S32), welche sich jeweils beim Bereich-Manager (33) registrieren (S36) und vom Bereich-Manager (33) jeweils mit einem der definierten Teilbereiche (61', 62', 63', 64', 65') des Hauptfensters (60) verknüpft werden (S5), und welche jeweils auf der Anzeige (4) einen Fensterbereich (61, 62, 63, 64, 65) in demjenigen Teilbereich (61', 62', 63', 64', 65') des Hauptfensters (60) darstellen, mit dem sie verknüpft sind.

2. Das Verfahren nach Anspruch 1, **dadurch gekennzeichnet, dass** im Plugin-Katalog (35) zudem eines oder mehrere Widget-Plugins und ein Widget-Manager-Plugin registriert werden; und dass beim Aufstarten der Programmapplikation (34) zudem das Widget-Manager-Plugin aufgestartet (S33) wird, welches Widget-Kontexte bestimmt, die jeweils einem der Fensterbereich-Plugins zugeordnet sind, und die Widget-Plugins aufgestartet werden, welche jeweils Schnittstelleneingabelemente und/oder Schnittstellenausgabelemente erzeugen und auf der Anzeige (4) in denjenigen Fensterbereich (61, 62, 63, 64, 65) einfügen, an den sie durch die bestimmten Widget-Kontexte angeknüpft sind.

3. Das Verfahren nach einem der Ansprüche 1 oder 2, **dadurch gekennzeichnet, dass** im Plugin-Katalog (35) zudem ein Login-Plugin registriert wird, dass beim Aufstarten der Programmapplikation (34) zudem das Login-Plugin (S34) aufgestartet wird, welches vom Benutzer Identifizierungsdaten und Zugangsdaten entgegennimmt (S8), dass basierend auf den Identifizierungsdaten und Zugangsdaten benutzerspezifisch gespeicherte Widget-Konfigurationen (S9) bestimmt werden, und dass die benutzerspezifischen Widget-Konfigurationen (36) auf die den Fensterbereich-Plugins zugeordneten Widget-Kontexte angewandt werden (S10).

4. Das Verfahren nach einem der Ansprüche 1 bis 3, **dadurch gekennzeichnet, dass** vor dem Aufstarten von Plugins jeweils eine Plugin-spezifische Lizenzüberprüfung durchgeführt (S2) wird, und dass das Aufstarten eines Plugins bei ungenügender respektive fehlender Lizenz verhindert wird.

5. Das Verfahren nach einem der Ansprüche 1 bis 4, **dadurch gekennzeichnet, dass** die Plugins vor dem Aufstarten sprachspezifisch gefiltert (S2) werden, und dass das Aufstarten von sprachspezifischen Plugins auf eine definierte Sollsprache ausgerichtet ist.

6. Ein Computersystem zum Generieren einer grafischen Benutzerschnittstelle (6) für eine Programmapplikation (34) auf einer Anzeige (4), umfassend:
einen Plugin-Katalog (35) zum Registrieren von mehreren Plugins für die Programmapplikation (34), wobei die Plugins ein Hauptfenster-Plugin und mehrere Fensterbereich-Plugins umfassen,
einen Plugin-Manager (32), der eingerichtet ist beim Aufstarten der Programmapplikation (34) das Hauptfenster-Plugin und die Fensterbereich-Plugins aufzustarten, wobei das Hauptfenster-Plugin eingerichtet ist, auf der Anzeige (4) ein Hauptfenster (60) darzustellen und mehrere Teilbereiche (61', 62', 63', 64', 65') des Hauptfensters (60) zu definieren, und
einen Bereich-Manager (33) zum Registrieren der definierten Teilbereiche (61', 62', 63', 64', 65') des Hauptfensters (60),
wobei die Fensterbereich-Plugins eingerichtet sind, sich jeweils beim Bereich-Manager (33) zu registrieren um vom Bereich-Manager (33) jeweils mit einem der definierten Teilbereiche (61', 62', 63', 64', 65') des Hauptfensters (60) verknüpft zu werden, und welche jeweils auf der Anzeige (4) einen Fensterbereich (61, 62, 63, 64, 65) in demjenigen Teilbereich (61', 62', 63', 64', 65') des Hauptfensters (60) darstellen, mit dem sie verknüpft sind.

7. Das Computersystem nach Anspruch 6, **dadurch gekennzeichnet, dass** im Plugin-Katalog (35) zudem eines oder mehrere Widget-Plugins und ein Widget-Manager-Plugin registriert sind; und dass der Plugin-Manager (32) eingerichtet ist beim Aufstarten der Programmapplikation (34) zudem das Widget-Manager-Plugin aufzustarten, welches eingerichtet ist Widget-Kontexte zu bestimmen, die jeweils einem der Fensterbereich-Plugins zugeordnet sind, und die Widget-Plugins aufzustarten, welche jeweils eingerichtet sind Schnittstelleneingabelemente und/oder Schnittstellenausgabelemente zu erzeugen und auf der Anzeige (4) in denjenigen Fensterbereich (61, 62, 63, 64, 65) einzufügen, an den sie durch die bestimmten Widget-Kontexte angeknüpft sind.

8. Das Computersystem nach einem der Ansprüche 6 oder 7, **dadurch gekennzeichnet, dass** im Plugin-Katalog (35) zudem ein Login-Plugin registriert ist, dass der Plugin-Manager (32) eingerichtet ist beim Aufstarten der Programmapplikation (34) zudem das Login-Plugin aufzustarten, welches eingerichtet ist, vom Benutzer Identifizierungsdaten und Zugangsdaten entgegenzunehmen, dass das Widget-Manager-Plugin eingerichtet ist, basierend auf den Identifizierungsdaten und Zugangsdaten benutzerspezifisch gespeicherte Widget-Konfigurationen (36) zu bestimmen und die benutzerspezifischen Widget-Konfigurationen (36) auf die den Fensterbereich-Plugins zugeordneten Widget-Kontexte anzuwenden.

9. Das Computersystem nach einem der Ansprüche 6 bis 8, **gekennzeichnet durch** einen Lizenz-Manager (31), der eingerichtet ist, vor dem Aufstarten von Plugins jeweils eine Plugin-spezifische Lizenzüberprüfung durchzuführen, um das Aufstarten eines Plugins bei ungenügender respektive fehlender Lizenz zu verhindern.

10. Das Computersystem nach einem der Ansprüche 6 bis 9, **dadurch gekennzeichnet, dass** der Plugin-Katalog (35) eingerichtet ist, die Plugins vor dem Aufstarten sprachspezifisch zu filtern, um das Aufstarten von sprachspezifischen Plugins auf eine definierte Sollsprache auszurichten.

11. Ein Computerprogrammprodukt umfassend ein computerlesbares Medium mit darauf gespeichertem Computerprogrammcode zur Steuerung eines oder mehrerer Prozessoren eines Computersystems zum Generieren einer grafischen Benutzerschnittstelle (6) für eine Programmapplikation (34) auf einer Anzeige (4), derart, dass das Computersystem folgende Schritte ausführt:
Registrieren (S1) von mehreren Plugins für die Programmapplikation (34) in einem Plugin-Katalog (35), wobei die Plugins ein Hauptfenster-Plugin und mehrere Fensterbereich-Plugins umfassen,
beim Aufstarten der Programmapplikation (34) Aufstarten des Hauptfenster-Plugins (S31), welches auf der Anzeige (4) ein Hauptfenster (60) darstellt und mehrere Teilbereiche (61', 62', 63', 64', 65') des Hauptfensters (60) definiert (S35), Registrieren (S4) der definierten Teilbereiche (61', 62', 63', 64', 65') des Hauptfensters (60) bei einem Bereich-Manager (33), und
Aufstarten der Fensterbereich-Plugins (S32), welche sich jeweils beim Bereich-Manager (33) registrieren (S36) und vom Bereich-Manager (33) jeweils mit einem der definierten Teilbereiche (61', 62', 63', 64', 65') des Hauptfensters (60) verknüpft werden (S5), und welche jeweils auf der Anzeige (4) einen Fensterbereich (61, 62, 63, 64, 65) in demjenigen Teilbereich (61', 62', 63', 64', 65') des Hauptfensters (60) darstellen, mit dem sie verknüpft sind.

12. Das Computerprogrammprodukt nach Anspruch 11, **gekennzeichnet durch** Computerprogrammcode zur Steuerung der Prozessoren, derart, dass das Computersystem im Plugin-Katalog (35) zudem eines oder mehrere Widget-Plugins und ein Widget-Manager-Plugin registriert, und beim Aufstarten der Programmapplikation (34) zudem das Widget-Manager-Plugin aufstartet (S33), welches Widget-Kontexte bestimmt, die jeweils einem der Fensterbereich-Plugins zugeordnet sind, und die Widget-Plugins aufstartet, welche jeweils Schnittstelleneingabelemente und/oder Schnittstellenausgabelemente erzeugen und auf der Anzeige (4) in denjenigen Fensterbereich (61, 62, 63, 64, 65) einfügen, an den sie durch die bestimmten Widget-Kontexte angeknüpft sind.

13. Das Computerprogrammprodukt nach einem der Ansprüche 11 oder 12, **gekennzeichnet durch** Computerprogrammcode zur Steuerung der Prozessoren, derart, dass das Computersystem im Plugin-Katalog (35) zudem ein Login-Plugin registriert, beim Aufstarten der Programmapplikation (34) zudem das Login-Plugin aufstartet (S34), welches vom Benutzer Identifizierungsdaten und Zugangsdaten entgegennimmt (S8), basierend auf den Identifizierungsdaten und Zugangsdaten benutzerspezifisch gespeicherte Widget-Konfigurationen bestimmt, und die benutzerspezifischen Widget-Konfigurationen auf die den Fensterbereich-Plugins zugeordneten Widget-Kontexte anwendet (13).

14. Das Computerprogrammprodukt nach einem der Ansprüche 11 bis 13, **gekennzeichnet durch** Computerprogrammcode zur Steuerung der Prozessoren, derart, dass das Computersystem vor dem Aufstarten von Plugins jeweils eine Plugin-spezifische Lizenzüberprüfung durchführt (S2), und das Aufstarten eines Plugins bei ungenügender respektive fehlender Lizenz verhindert.

15. Das Computerprogrammprodukt nach einem der Ansprüche 11 bis 13, **gekennzeichnet durch** Computerprogrammcode zur Steuerung der Prozessoren, derart, dass das Computersystem die Plugins vor dem Aufstarten sprachspezifisch filtert (S2), und das Aufstarten von sprachspezifischen Plugins auf eine definierte Sollsprache ausrichtet.

## Claims

1. A computer-implemented method for generating a graphic user interface (6) for a program application (34) on a display (4),the method comprising:
registering (S1) a number of plugins for a program application (34) in a plugin catalogue (35), wherein the plugins comprise a main window plugin and a number of window area plugins,
during start-up of the program application (34) starting up the main window plugin (S31) which on the display (4) depicts a main window (60) and defines (S35) a number of partial areas (61', 62', 63', 64', 65') of the main window (60),
registering (S4) the defined partial areas (61', 62', 63', 64', 65') of the main window (60) with an area manager (33), and starting up the window area plugins (S32) each of which registers (S36) with the area manager (33) and which are linked (S5), respectively, by the area manager (33) with one of the defined partial areas (61', 62', 63', 64', 65') of the main window (60), and which, on the display (4) respectively represent a window area (61, 62, 63, 64, 65) in that partial area (61', 62', 63', 64', 65') of the main window (60), with which they are linked.

2. The method according to claim 1, **characterised in that** one or more widget plugins and a widget manager plugin are additionally registered in the plug-in catalogue (35) and that during start-up of the program application (34) the widget manager plugin is also started up (S33), which determines widget contexts assigned respectively, to one of the window area plugins, and the widget plugins are started up which respectively generate interface input elements and/or interface output elements and insert them on the display (4) into that window area (61, 62, 63, 64, 65) to which they are linked by the determined widget contexts.

3. The method according to one of claims 1 or 2, **characterised in that** a login plugin is additionally registered in the plugin catalogue (35), that during start-up of the program application (34) the login plugin (S34) is also started which receives (S8) identification data and access data from the user, that user-specifically stored widget configurations (S9) are determined based on the identification data and access data, and that the user-specific widget configurations (36) are applied (S10) to the widget contexts assigned to the window-area plugins.

4. The method according to one of claims 1 to 3, **characterised in that** prior to the start-up of plugins a plugin-specific licence check is performed (S2), and **in that** the start-up of a plug-in is prevented if the licence is sufficient or missing.

5. The method according to one of claims 1 to 4, **characterised in that** prior to start-up the plugins are filtered by language (S2), and **in that** start-up of language-specific plugins is brought into line with a defined target language.

6. A computer system form generating a graphic user interface (6) for a program application (34) on a display (4), comprising:
a plugin catalogue (35) for registering a number of plugins for the program application (34), wherein the plugins comprise a main window plugin and a number of window area plugins,
a plugin manager (32) adapted to start up the main window plugin and the window area plugins at the start-up of the program application (34), wherein the main window plugin is adapted to display a main window (60) on the display (4) and to define a number of partial areas (61', 62', 63', 64', 65') of the main window (60), and an area manager (33) for registering the defined partial areas (61', 62', 63', 64', 65') of the main window (60),
wherein the window area plugins are each adapted to register with the area manager (33) in order to be linked respectively, by the area manager (33) with one of the defined partial areas (61', 62', 63', 64', 65') of the main window (60), and which on the display (4) represent a window area (61, 62, 63, 64, 65) in that partial area (61', 62', 63', 64', 65') of the main window (60), with which they are linked.

7. The computer system according to claim 6, **characterised in that** one or more widget plugins are additionally registered in the plugin catalogue (35) and **in that** the plugin manager (32) is adapted during start-up of the program application (34) to also start up the widget manager plugin which is adapted to determine widget contexts assigned respectively to the window area plugins and to start up the widget plugins which are each adapted to generate interface input elements and/or interface output elements and insert these on the display (4) into that window area (61, 62, 63, 64, 65) to which they are linked by the determined widget context.

8. The computer system according to claim 6 or 7, **characterised in that** a login plugin is also registered in the plugin catalogue (35), **in that** the plug-in manager (32) is adapted, during start-up of the program application (34), to also start up the login plugin which is adapted to receive identification data and access data from the user, **in that** the widget manager plugin is adapted, based on the identification data and access data, to determine user-specifically stored widget configurations (36) and to apply the user-specific widget configurations (36) to the widget contexts assigned to the window area plugins.

9. The computer system according to one of claims 6 to 8, **characterised by** a licence manager (31) which is adapted to respectively perform a plugin-specific licence check prior to the start-up of the plugins in order to prevent the start-up of a plugin if the licence is insufficient or missing.

10. The computer system according to one of claims 6 to 9, **characterised in that** the plugin catalogue (35) is adapted to filter the plugins by language prior to the start-up in order to align the start-up of language-specific plugins with a defined target language.

11. A computer program product comprising a computer-readable medium with computer program code stored thereon for controlling one or more processors of a computer system for generating a graphic user interface (6) for a program application (34) on a display (4) such that the computer system performs the steps of:
registering (S1) a number of plugins for the program application (34) in a plugin catalogue (35), wherein the plugins comprise a main window plugin and a number of window area plugins,
during start-up of the program application (34), starting up the main window plugin (S31), which represents a main window (60) on the display (4) and defines (S35) a number of partial areas (61', 62', 63', 64', 65') of the main window (60),
registering (S4) the defined partial areas (61', 62', 63', 64', 65') of the main window (60) with an area manager (33) and
starting up the window area plugins (S32) each of which registers (S36) with the area manager (33) and which are each linked (S5) by the area manager (33) with one of the defined partial areas (61', 62', 63', 64', 65') of the main window (60),
and each of which, on the display (4), represents a window area (61, 62, 63, 64, 65) in that partial area (61', 62', 63', 64', 65') of the main window (60) with which it is linked.

12. The computer program product according to claim 11, **characterised by** computer program code for controlling the processors such that the computer system also registers one or more widget plugins and a widget manager plugin in the plugin catalogue (35) and during start-up of the program application (34) also starts up (S33) the widget manager plugin, which determines widget contexts assigned respectively to one of the window area plugins, and starts up the widget plugins each of which generates interface input elements and/or interface output elements and inserts these on the display (4) into that window area (61, 62, 63, 64, 65), to which they are linked by the determined widget contexts.

13. The computer program product according to claim 11 or 12, **characterised by** computer program code for controlling the processors such that the computer system also registers a login plugin in the plugin catalogue (35), during start-up of the program application (34) also starts up (S34) the login plugin which receives (S8) identification data and access data from the user,
determines, based on the identification data and access data, user-specifically stored widget configurations, and applies (13) the user-specific widget configurations to the widget contexts assigned to the window area plugins.

14. The computer program product according to one of claims 11 to 13, **characterised by** computer program code for controlling the processors such that the computer system prior to starting up the plugins, performs (S2) a plugin-specific licence check and prevents the start-up of a plugin if the licence is insufficient or missing.

15. The computer program product according to one of claims 11 to 13, **characterised by** computer program code for controlling the processors such that the computer system filters (S2) the plugins by language prior to the start-up and aligns the start-up of language-specific plugins with a defined target language.

## Revendications

1. Procédé mis en oeuvre par ordinateur pour générer une interface d'utilisateur graphique (6) pour une application de programme (34) sur un affichage (4), comprenant :
l'enregistrement (S1) de plusieurs modules d'extension pour l'application de programme (34) dans un catalogue de modules d'extension (35), les modules d'extension comprenant un module d'extension de fenêtre principale et plusieurs modules d'extension de zone de fenêtre,
lors du lancement de l'application de programme (34), lancement du module d'extension de fenêtre principale (S31), lequel représente sur l'affichage (4) une fenêtre principale (60) et définit (S35) plusieurs parties de zone (61',62',63',64',65') de la fenêtre principale (60),
l'enregistrement (S4) des parties de zones définies (61',62',63',64',65') de la fenêtre principale (60) pour un gestionnaire de zone (33), et
le lancement des modules d'extension de zone de fenêtre (S32), lesquels s'enregistrent (S36) respectivement pour le gestionnaire de zone (33) et sont liés (S5) par le gestionnaire de zone (33) respectivement à une des parties de zone définies (61',62',63',64',65') de la fenêtre principale (60)
et lesquelles représentent respectivement sur l'affichage (4) une zone de fenêtre (61,62,63,64,65) dans la partie de zone (61', 62', 63', 64', 65') de la fenêtre principale (60) avec laquelle ils sont liés.

2. Procédé selon la revendication 1, **caractérisé en ce que** dans le catalogue de modules d'extension (35) sont enregistrés en plus un ou plusieurs modules d'extension de widgets et un module d'extension de gestionnaire de widgets et **en ce que** lors du lancement de l'application de programme (34), le module d'extension de gestionnaire de widgets est lancé en plus (S33), lequel détermine les contextes de widgets qui sont respectivement attribués à un des modules d'extension de la zone de fenêtre et les modules d'extension de widgets sont lancés, lesquels génèrent respectivement des éléments d'entrée d'interface et/ou des éléments de sortie d'interface et les introduisent sur l'affichage (4) dans la zone de fenêtre (61,62,63,64,65) à laquelle ils sont liés par les contextes de widgets définis.

3. Procédé selon l'une quelconque des revendications 1 ou 2, **caractérisé en ce que** dans le catalogue de modules d'extension (35) est enregistré en plus un module d'extension de connexion, **en ce que** lors du lancement de l'application de programme (34) le module d'extension de connexion (S34) est en plus lancé, lequel accepte (S8) de l'utilisateur les données d'identification et les données d'accès, **en ce qu'**en se basant sur les données d'identification et les données d'accès, les configurations de widgets mémorisées spécifiques à l'utilisateur (S9) sont déterminées et **en ce que** les configurations de widgets spécifiques à l'utilisateur (36) sont appliquées (S10) aux contextes de widgets attribués aux modules d'extension de zone de fenêtre.

4. Procédé selon l'une quelconque des revendications 1 à 3, **caractérisé en ce qu'**avant le lancement des modules d'extension un contrôle de licence spécifique au module d'extension est respectivement effectué (S2) et **en ce que** le lancement d'un module d'extension pour une licence défectueuse respective insuffisante est évité.

5. Procédé selon l'une quelconque des revendications 1 à 4, **caractérisé en ce que** les modules d'extension sont filtrés (S2) spécifiquement à la langue avant le lancement des modules d'extension et **en ce que** le lancement des modules d'extension spécifiques à la langue est orienté sur une langue théorique définie.

6. Système informatique pour générer une interface d'utilisateur graphique (6) pour une application de programme (34) sur un affichage (4), comprenant :
un catalogue de modules d'extension (35) pour enregistrer plusieurs modules d'extension pour l'application de programme (34), les modules d'extension comprenant un module d'extension de fenêtre principale et plusieurs modules d'extension de zone de fenêtre,
un gestionnaire de module d'extension (32), qui est agencé pour mettre en marche le module d'extension de fenêtre principale et les modules d'extension de zone de fenêtre lors du lancement de l'application de programme (34), le module d'extension de fenêtre principale étant agencé pour représenter une fenêtre principale (60) sur l'affichage (4) et définir plusieurs parties de zone (61', 62', 63', 64', 65') de la fenêtre principale (60), et
un gestionnaire de zone (33) pour enregistrer les parties de zone définies (61', 62', 63', 64', 65') de la fenêtre principale (60),
les modules d'extension de zone de fenêtre étant agencés pour s'enregistrer respectivement pour le gestionnaire de zone (33) pour être liés par le gestionnaire de zone (33) respectivement à une des parties de zone définies (61',62',63',64',65') de la fenêtre principale (60) et lesquelles représentent respectivement sur l'affichage (4) une zone de fenêtre (61,62,63,64,65) dans la partie de zone (61',62',63',64',65') de la fenêtre principale (60) avec laquelle elle sont reliées.

7. Système informatique selon la revendication 6, **caractérisé en ce que** dans le catalogue des modules d'extension (35) sont enregistrés en plus un ou plusieurs modules d'extension de widgets et un module d'extension de gestionnaire de widgets et **en ce que** le gestionnaire de module d'extension (32) est agencé pour lancer en plus le module d'extension de gestionnaire de widgets lors du lancement de l'application de programme (34), lequel est agencé pour déterminer les contextes de widgets qui sont respectivement attribués à un module d'extension de zone de fenêtre et pour lancer les modules d'extension de widgets, lesquels sont respectivement agencés pour produire des éléments d'entrée d'interface et/ou des éléments de sortie d'interface et pour les introduire dans l'affichage (4) dans la zone de fenêtre (61,62,63,64,65) à laquelle ils sont reliés par les contextes de widgets déterminés.

8. Système informatique selon l'une quelconque des revendications 6 ou 7, **caractérisé en ce que** dans le catalogue de modules d'extension (35) est enregistré en plus un module d'extension de connexion, **en ce que** le gestionnaire de module d'extension (32) est agencé pour lancer en plus le module d'extension de connexion lors du lancement de l'application de programme (34), lequel est agencé pour accepter de l'utilisateur les données d'identification et les données d'accès, **en ce que** le module d'extension de gestionnaire de widgets est agencé pour déterminer les configurations de widgets (36) mémorisées spécifiques à l'utilisateur en se basant sur les données d'identification et les données d'accès et pour appliquer les configurations de widgets (36) spécifiques à l'utilisateur aux contextes de widgets attribués aux modules d'extension de zone de fenêtre.

9. Système informatique selon l'une quelconque des revendications 6 à 8, **caractérisé par** un gestionnaire de licence (31), qui est agencé pour exécuter respectivement un contrôle de licence spécifique au module d'extension avant le lancement des modules d'extension pour éviter le lancement d'un module d'extension pour une licence défectueuse respective insuffisante.

10. Système informatique selon l'une quelconque des revendications 6 à 9, **caractérisé en ce que** le catalogue de modules d'extension (35) est agencé pour filtrer spécifiquement à la langue les modules d'extension avant le lancement pour orienter le lancement des modules d'extension spécifiques à la langue sur une langue théorique définie.

11. Produit de programme informatique comprenant un moyen lisible par ordinateur avec un code de programmation informatique mémorisé dessus pour piloter un ou plusieurs processeurs d'un système informatique pour générer une interface d'utilisateur graphique (6) pour une application de programme (34) sur un affichage (4) de telle sorte que le système informatique exécute les étapes suivantes :
enregistrement (S1) de plusieurs modules d'extension pour l'application de programme (34) dans un catalogue de modules d'extension (35), les modules d'extension comprenant un module d'extension de fenêtre principale et plusieurs modules d'extension de zone de fenêtre,
lancement du module d'extension de fenêtre principale (S31) lors du lancement de l'application de programme (34), lequel représente une fenêtre principale (60) sur l'affichage (4) et définit (S35) plusieurs parties de zone (61', 62', 63', 64', 65') de la fenêtre principale (60),
enregistrement (S4) des parties de zone (61', 62', 63', 64', 65') définies de la fenêtre principale (60) pour un gestionnaire de zone (33), et
lancement des modules d'extension de zone de fenêtre (S32), lesquels s'enregistrent (S36) respectivement pour le gestionnaire de zone (33) et sont liés (S5) par le gestionnaire de zone (33) respectivement à une des parties de zone définies (61', 62', 63', 64', 65') de la fenêtre principale (60)
et lesquels représentent respectivement sur l'affichage (4) une zone de fenêtre (61,62,63,64,65) dans la partie de zone (61', 62', 63', 64', 65') de la fenêtre principale (60) avec laquelle ils sont liés.

12. Produit de programme informatique selon la revendication 11, **caractérisé par** un code de programmation informatique pour piloter les processeurs de telle sorte que le système informatique enregistre en plus dans le catalogue de modules d'extension (35) un ou de plusieurs modules d'extension de widgets et un module d'extension de gestionnaire de widgets et lance (S33) en plus le module d'extension de gestionnaire de widgets lors du lancement de l'application de programme (34), lequel détermine des contextes de widgets qui sont respectivement attribués à un des modules d'extension de zone de fenêtre et lance les modules d'extension de widgets, lesquels produisent respectivement des éléments d'entrée d'interface et/ou des éléments de sortie d'interface et les introduisent sur l'affichage (4) dans la zone de fenêtre (61,62,63,64,65) à laquelle ils sont reliés par les contextes de widgets déterminés.

13. Produit de programme informatique selon l'une quelconque des revendications 11 ou 12, **caractérisé par** un code de programmation informatique pour piloter les processeurs de telle sorte que le système informatique enregistre dans le catalogue de modules d'extension (35) en plus un module d'extension de connexion, lance en plus le module d'extension de connexion (S34) lors du lancement de l'application de programme (34), lequel accepte (S8) de l'utilisateur les données d'identification et les données d'accès, détermine les configurations de widgets mémorisées spécifiquement à l'utilisateur en se basant sur les données d'identification et les données d'accès et applique (13) les configurations de widgets mémorisées spécifiques à l'utilisateur aux contextes de widgets attribués aux modules d'extension de la zone de fenêtre.

14. Produit de programme informatique selon l'une quelconque des revendications 11 à 13, **caractérisé par** un code de programmation informatique pour piloter les processeurs de telle sorte que le système informatique exécute (S2) respectivement un contrôle de licence spécifique au module d'extension avant le lancement des modules d'extension et évite le lancement d'un module d'extension pour une licence défectueuse respective insuffisante.

15. Produit de programme informatique selon l'une quelconque des revendications 11 à 13, **caractérisé par** un code de programmation informatique pour piloter les processeurs de telle sorte que le système informatique filtre spécifiquement à la langue (S2) les modules d'extension avant le lancement et oriente le lancement des modules d'extension spécifiques à la langue sur une langue théorique définie.
